# EUROPEAN PATENT APPLICATION

(11) **EP 3 471 263 A1**
(43) Date of publication of application: **17.04.2019**
(21) Application number: 17813008.4
(22) Date of filing: 14.04.2017
(51) Int. Cl.: H02P 25/08, F02N 11/04, H02M 7/48, B60L 7/14

(54) **SR MOTOR CONTROL SYSTEM AND SR MOTOR CONTROL METHOD**

(30) Priority: 13.06.2016 JP 2016117398
(71) Applicant: Mitsuba Corporation, Kiryu-shi, Gunma 376-8555 (JP)
(72) Inventor: YAMADA Yoshihisa, Kiryu-shi Gunma 376-8555 (JP); SEMBA Daisuke, Kiryu-shi Gunma 376-8555 (JP); ISHIJIMA Masahiro, Kiryu-shi Gunma 376-8555 (JP); OKADA Hiroaki, Kiryu-shi Gunma 376-8555 (JP); OGANE Takahiko, Kiryu-shi Gunma 376-8555 (JP); KUSUMOTO Wataru, Kiryu-shi Gunma 376-8555 (JP)
(74) Representative: Hoffmann Eitle
(86) International application number: PCT/JP2017/015250
(87) International publication number: WO 2017/217102

(57) **Abstract**

An SR motor control system 10 which performs drive control for an SR motor 1 includes power modules 11 and 12, a switch part 31, and a booster capacitor 38. The switch part 31 is disposed on a power supply line 30 and has FETs 32 and 33 for controlling electrical connection of the power supply line 30. The booster capacitor 38 is disposed between the power modules 11, 12 and the switch part 31. Power regeneration operation is performed in a state where the FET 33 is turned OFF to perform a supply mode to supply the charge of the booster capacitor 38 and, reflux/boosting of charging the booster capacitor 38 with regeneration current is performed. The FET 33 is turned ON after performing the reflux/boosting a plurality of times to return the charge stored in the booster capacitor 38 to a battery 7.

## Description

### Technical Field

The present invention relates to control technology for an SR motor (Switched Reluctance Motor) and, more particularly, to power regeneration technology in an ISG (Integrated Starter Generator).

### Background Art

Conventionally, in the field of electric motors, there is known power generation technology that generates a regeneration current by utilizing motor rotation to convert the kinetic energy of the motor into electric power. For example, in vehicles, such as automobiles and trains, regeneration control is performed during deceleration, electric power obtained thereby is charged in a battery or a capacitor, and the charged power is used at start-up or acceleration of the vehicles. Particularly, in the automobiles and the like, braking effect can be obtained by the regeneration operation and, thus, a starter/generator system capable of performing the regeneration operation is widely used as an engine starter motor.

Against the backdrop of rise in rare earth prices etc., there has recently been an increased demand for an SR motor as a motor that does not use permanent magnets in a rotor. The SR motor has a stator in which a plurality of inward salient poles are formed and a rotor disposed inside the stator and having a plurality of outward salient poles. In the SR motor, excitation coils wound around the inward salient poles are selectively energized to allow the inward salient poles of the stator to magnetically attract the outward salient poles of the rotor to thereby generate a torque in the rotor. The SR motor has a simple and robust structure, so that the application range thereof is extended to a drive source for an engine starter etc. Further, improvement of control technology facilitates the use of the SR motor as a generator and, nowadays, application to the above-mentioned starter/generator system is increased.

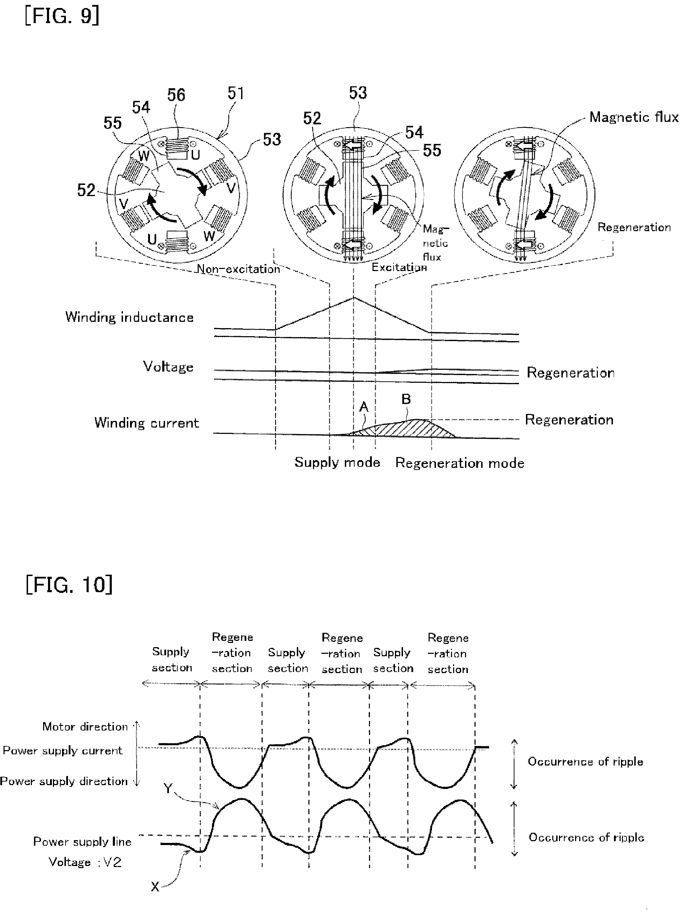

FIG. 9 is an explanatory view illustrating power regeneration operation in the SR motor connected to an engine crank shaft. When a vehicle travels by inertia or travels on a downward slope, a rotor 52 of an SR motor 51 is rotated by external force. At this time, power regeneration is performed utilizing the rotation of the rotor 52. As illustrated in FIG. 9, the SR motor 51 temporarily energizes a coil 56 at the timing when salient poles 54 of a stator 53 and rotor salient poles 55 are opposed to and aligned with each other (portion A of FIG. 9: supply mode) . By the temporary energization, magnetic flux is generated in the motor through the rotor 52; however, when the rotor 52 is further rotated by the external force, the generated magnetic flux is reduced by the rotation. Then, electromotive force is generated in the coil 56 so as to maintain the magnetic flux to make regeneration current to flow in the coil 56, whereby power regeneration is performed (portion B of FIG. 9: regeneration mode).

### Citation List

### Patent Document

Patent Document 1: JP 10-271893 A
Patent Document 2: JP 11-022297 A

### Disclosure of the Invention

### Problems to be Solved by the Invention

In the regeneration operation illustrated in FIG. 9, the magnitude of the regeneration current is proportional to a speed at which magnetic fluxes cross each other (speed at which the rotor salient pole 55 and the coil 56 cross each other), i.e., motor rotation speed and the strength of magnetic flux generated in the coil 56, i.e., the magnitude of excitation current flowing in the coil 56. Thus, to obtain a large regeneration current, it is only necessary to apply a large excitation current to the coil when the motor is rotated at high speed. However, when the motor speed becomes high, the time period during which the tooth and salient pole are opposed to each other is reduced to shorten an energization time to the coil 56, failing to make current sufficient to excite the coil 56 flow. That is, the peak of the portion A in FIG. 9 is lowered (area of the portion A is reduced). Correspondingly, the regeneration current is reduced (the peak of the portion B in FIG. 9 is lowered), degrading power generation efficiency in the high rotation speed region of the motor.

Further, during the regeneration operation, control of supplying current to the motor (excitation) and then returning current from the motor to a battery (power generation) is repeated. Thus, as illustrated in FIG. 10, the direction or magnitude of the current on a power supply line fluctuates, and this current fluctuation causes voltage ripple according to a resistance component. That is, in the power supply section, voltage drop is caused by wiring resistance to drop a terminal voltage of a motor driver circuit (portion X of FIG. 10) . Further, in the regeneration section, a large current flows toward the battery side, causing a delay in battery charging due to an inductance component (portion Y of FIG. 10). The above voltage drop and charging delay appear as the voltage ripple. The voltage ripple may make the operation of a connected electronic circuit unstable or may increase conduction/radiation noise and is thus required to be reduced.

### Means for Solving the Problems

An SR motor control system according to the present invention is a system performing drive control for a switched reluctance motor, which has a stator provided with a plurality of excitation coils and a rotor provided inside the stator and provided with a plurality of salient poles, and capable of performing power regeneration operation for obtaining regeneration power from the switched reluctance motor being driven, the SR motor control system including: a power circuit part having a plurality of power elements for switching energization to the plurality of excitation coils; a switch part disposed on a power supply line between the power circuit part and a power supply and having a switching element controlling electrical connection of the power supply line; a capacitor disposed between the switch part and the power circuit part so as to be parallel to the power circuit part; and a controller controlling ON/OFF of the switching element. The power regeneration operation has a supply mode that energizes the excitation coil to generate magnetic flux and a regeneration mode that generates regeneration current in the excitation coil by utilizing a change in the magnetic flux. The controller performs the power regeneration operation in a state where the switching element is turned OFF to perform the supply mode to supply the charge of the capacitor to the excitation coil and, performs reflux/boosting to charge the capacitor with the regeneration current and turns ON the switching element after performing the reflux/boosting a plurality of times to return the charge stored in the capacitor to the power supply side.

In the present invention, power obtained by the regeneration operation is not returned as it is to the power supply, but is stored in the capacitor to boost the same. That is, the regeneration operation is performed while the voltage at the supply mode is being boosted. This allows the regeneration operation to be performed with a high voltage, thereby achieving efficient power regeneration (power generation) without use of an expensive special circuit.

The controller may perform the power regeneration operation involving the reflux/boosting in a high rotation speed region where the rotation speed of the switched reluctance motor exceeds a predetermined value. That is, the time period during which the tooth and salient pole are opposed to each other is reduced due to the high rotation speed to shorten an energization time to the coil, with the result that a sufficient regeneration power cannot be generated in a single regeneration operation. In such a case, the power regeneration operation involving the reflux/boosting is performed. Thus, capacitor boosting operation is performed when the motor is rotated at high speed, otherwise it is not performed, so that power can be generated efficiently, and a load on the capacitor can be reduced.

The SR motor control system may further include a voltage detection part that detects the voltage of the capacitor, and in the power regeneration operation involving the reflux/boosting, the controller may turn ON the switching element when the detection value of the voltage detection part exceeds a predetermined threshold value. By thus monitoring the capacitor voltage, it is possible to prevent overvoltage from being applied to the capacitor.

In the power regeneration operation involving the reflux/boosting, the controller may turn ON the switching element at the timing when the excitation coil is not energized. This allows the capacitor boosting and power supply charging to be separated from each other by control, whereby a stable power generation operation can be achieved.

A smoothing capacitor capable of storing a charge to be returned to the power supply by the power regeneration operation may be provided between the switching element and the power supply. This can suppress a rapid change in the regeneration voltage to thereby reduce the ripple in the regeneration voltage.

The switching element may be an FET, and when returning the charge stored in the capacitor to the power supply side, the controller may PWM-control the FET so as not to allow the voltage value of the regeneration current to exceed a predetermined threshold value. By thus PWM-controlling a charging voltage to the power supply, overvoltage charging of the power supply can be prevented, and noise generated due to mechanical elements such as a harness can be reduced.

An SR motor control system according to another aspect of the present invention is a system performing drive control for a switched reluctance motor, which has a stator provided with a plurality of excitation coils and a rotor provided inside the stator and provided with a plurality of salient poles, and capable of performing power regeneration operation for obtaining regeneration power from the switched reluctance motor being driven, the SR motor control system including: a power circuit part having a plurality of power elements for switching energization to the plurality of excitation coils; a switch part disposed on a power supply line between the power circuit part and a power supply and having a switching element controlling electrical connection of the power supply line; a first capacitor disposed between the switch part and the power circuit part so as to be parallel to the power circuit part; and a controller for controlling ON/OFF of the switching element. The switch part has first and second switching elements connected in series on the power supply line and first and second diodes disposed in parallel to the first and second switching elements, respectively. The first and second diodes are disposed such that the conductive directions thereof are opposite to each other. A second capacitor whose one end side is connected to the power supply line between the first and second switching elements and whose other end side is connected to the ground side is disposed between the first and second switching elements.

An SR motor control method according to the present invention is a method of controlling a switched reluctance motor in an SR motor control system, the system including: the switched reluctance motor having a stator provided with a plurality of excitation coils and a rotor provided inside the stator and provided with a plurality of salient poles; a power circuit part having a plurality of power elements for switching energization to the plurality of excitation coils; a switch part disposed on a power supply line between the power circuit part and a power supply and having a switching element for controlling electrical connection of the power supply line; a capacitor disposed between the switch part and the power circuit part so as to be parallel to the power circuit part; and a controller for controlling ON/OFF of the switching element, the system being capable of performing power regeneration operation for obtaining regeneration power from the switched reluctance motor being driven. The power regeneration operation has a supply mode that energizes the excitation coil to generate magnetic flux and a regeneration mode that generates regeneration current in the excitation coil by utilizing a change in the magnetic flux, and the power regeneration operation is performed in a state where the switching element is turned OFF to perform the supply mode to supply the charge of the capacitor to the excitation coil and, reflux/boosting of charging the capacitor with the regeneration current is performed, and the switching element is turned ON after performing the reflux/boosting a plurality of times to return the charge stored in the capacitor to the power supply side.

In the present invention, power obtained by the regeneration operation is not returned as it is to the power supply, but is stored in the capacitor to boost the same. That is, the regeneration operation is performed while the voltage in the supply mode is being boosted. This allows the regeneration operation to be performed with a high voltage, thereby achieving efficient power regeneration (power generation) without the use of an expensive special circuit.

An SR motor control method according to another aspect of the present invention is a method of controlling a switched reluctance motor in an SR motor control system, the system including: the switched reluctance motor having a stator provided with a plurality of excitation coils and a rotor provided inside the stator and provided with a plurality of salient poles; a power circuit part having a plurality of power elements for switching energization to the plurality of excitation coils; a switch part disposed on a power supply line between the power circuit part and a power supply and having a switching element controlling electrical connection of the power supply line; a capacitor disposed between the switch part and the power circuit part so as to be parallel to the power circuit part; and a controller for controlling ON/OFF of the switching element, the system being capable of performing power regeneration operation for obtaining regeneration power from the switched reluctance motor being driven. The switch part has first and second switching elements connected in series on the power supply line and first and second diodes disposed in parallel to the first and second switching elements, respectively. The first and second diodes are disposed such that the conductive directions thereof are opposite to each other. A second capacitor whose one end side is connected to the power supply line between the first and second switching elements and whose other end side is connected to the ground side is disposed between the first and second switching elements. The power regeneration operation has a supply mode that energizes the excitation coil to generate magnetic flux and a regeneration mode that generates regeneration current in the excitation coil by utilizing a change in the magnetic flux. During the regeneration mode, ON/OFF of the second switching element is controlled so as not to allow the voltage value of the regeneration current to exceed a predetermined threshold value.

### Advantageous Effects of the Invention

The SR motor control system according to the present invention performs the power regeneration operation in a state where the switching element is turned OFF to perform the supply mode to supply the charge of the capacitor to the excitation coil and, performs reflux/boosting to charge the capacitor with the regeneration current. Then, the system turns ON the switching element after performing the reflux/boosting a plurality of times to return the charge stored in the capacitor to the power supply side. This allows the regeneration operation to be performed with a high voltage, thereby achieving efficient power regeneration without the use of a special circuit.

The SR motor control method according to the present invention performs the power regeneration operation in a state where the switching element is turned OFF to perform the supply mode to supply the charge of the capacitor to the excitation coil and, performs reflux/boosting to charge the capacitor with the regeneration current. Then, the method turns ON the switching element after performing the reflux/boosting a plurality of times to return the charge stored in the capacitor to the power supply side. This allows the regeneration operation to be performed with a high voltage, thereby achieving efficient power regeneration without the use of a special circuit.

### Brief Description of the Drawings

FIG. 1 is an explanatory view illustrating a circuit configuration of an SR motor control system according to a first embodiment of the present invention;
FIG. 2 is an explanatory view illustrating power regeneration operation in the SR motor control system of FIG. 1;
FIG. 3 is an explanatory view illustrating a change in regeneration current/voltage during the power regeneration;
FIG. 4 is an explanatory view illustrating a circuit configuration of a conventional SR motor control system;
FIG. 5 is an explanatory view illustrating a configuration in which a pre-charge circuit is provided to prevent inrush current from flowing to a smoothing capacitor;
FIGS. 6A to 6G are explanatory views each illustrating an operation pattern in each mode of an SR motor control system according to a second embodiment of the present invention;
FIG. 7 is an explanatory view illustrating a change in a winding current value when a regeneration mode and a reflux mode are repeatedly performed;
FIG. 8 is an explanatory view illustrating a circuit configuration of an SR motor control system according to a third embodiment of the present invention;
FIG. 9 is an explanatory view illustrating general power regeneration operation in a SR motor control system; and
FIG. 10 is an explanatory view illustrating a change in regeneration current/voltage during the power regeneration in the conventional SR motor control system.

### Best Mode for Carrying Out the Invention

Hereinafter, embodiments of the present invention will be described in detail based on the drawings.

### (First Embodiment)

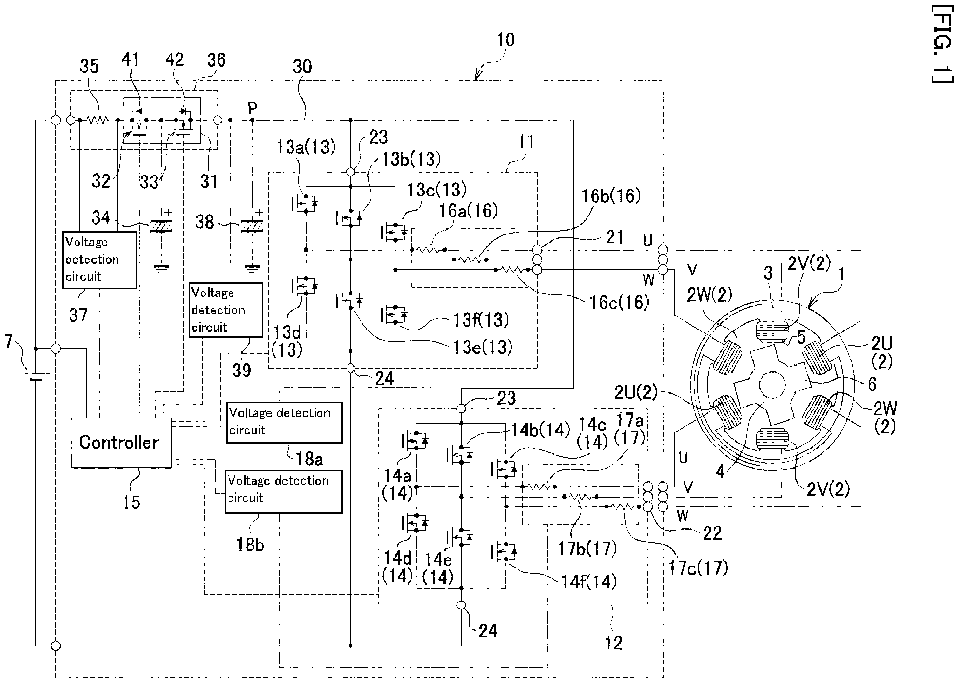

FIG. 1 is an explanatory view illustrating a circuit configuration of an SR motor control system 10 according to a first embodiment of the present invention. The object of the present embodiment is to improve power generation efficiency in a starter/generator system using an SR motor without using an expensive and complicated circuit like a DC-DC converter booster circuit.

An SR motor 1 driven by the circuit of FIG. 1 includes a stator 3 having an excitation coil (winding) 2 and a rotor 4 rotatably provided inside the stator 3. The SR motor 1 is directly connected to, e.g., a crank shaft of a vehicle engine and is used as a starter/generator. The stator 3 is provided with a plurality of salient poles 5 radially protruding inward. The salient poles 5 are wound with three-phase excitation coils 2 (2U, 2V, 2W) . The rotor 4 is provided with a plurality of salient poles 6 radially protruding outward from the outer periphery thereof. The rotation position of the rotor 4 is detected by a not-shown rotation position detection sensor such as a resolver. The excitation coils 2 are selectively energized according to the rotor rotation position to cause the salient poles 6 of the rotor 4 to be attracted by the salient poles 5 of the stator 3. As a result, a torque is generated in the rotor 4, and thus the SR motor 1 is driven into rotation.

As illustrated in FIG. 1, power modules (power circuit parts) 11 and 12 each having a plurality of power elements are provided on the upper stage side (battery 7 side: high side) of the SR motor 1 and on the lower stage side (low side), respectively. The power modules 11 and 12 are provided respectively with, as the power elements, six FETs 13 (FETs 13a to 13f) and six FETs 14 (FETs 14a to 14f) which are semiconductor switch elements. The FETs 13 and 14 are appropriately turned ON/OFF by a controller 15.

On the output stage side (motor connection line side) of the power modules 11 and 12, resistances 16 and 17 (16a to 16c, 17a to 17c) for detecting a motor current are provided for respective phases. The resistances 16 and 17 of the respective phases are connected to the excitation coils 2 (2U, 2V, 2W) of the SR motor 1. The resistances 16 and 17 are connected to voltage detection circuits 18a and 18b, respectively. The voltage detection circuits 18a and 18b detect voltage drop at the resistances 16a to 16c and 17a to 17c, and send their detection values to the controller 15. The controller 15 calculates the value of current flowing in each of the excitation coils 2U, 2V, and 2W of the SR motor 1 based on the detection values from the voltage detection circuits 18a and 18b to thereby control operation of the SR motor 1.

In the SR motor control system 10, when the SR motor 1 is driven, for example, exciting the U-phase, the controller 15 turns ON the FET 13a of the upper stage side power module 11 and FET 14d of the lower stage side power module 12 to energize the U-phase excitation coil 2U of the SR motor 1. Similarly, the controller 15 sequentially excites the V-phase (FET 13b and FET 14e: ON) and W-phase (FET 13c and FET 14f: ON) to drive the SR motor 1 into rotation.

On the other hand, when the SR motor 1 is used as a power generator, for example, in the U-phase regeneration operation, the controller 15 turns ON the FET 13d of the upper stage side power module 11 and FET 14a of the lower stage side power module 12 to perform a regeneration mode to thereby regenerate power on the battery 7 side (power supply side) . The regeneration operation for each of V- and W-phases is performed in a similar way. That is, the controller 15 turns ON the FET 13e and FET 14b in the V-phase regeneration operation and turns ON the FET 13f and FET 14c in the W-phase regeneration operation to regenerate power on the battery 7 side.

As described above, the SR motor control system 10 of FIG. 1 adopts the power modules 11 and 12 each having a package of six power elements. This simplifies the circuit configuration as compared to a case where a circuit is constituted of discrete parts, thereby achieving a reduction in the circuit size. This in turn reduces the number of electrical connection points to improve workability, making it possible to reduce the cost of a product. For example, in conventional SR motor drive circuits, 24 connection points need to be provided before and after the FETs, while in the circuit of FIG. 1, the number of connection points is reduced to five in each of the power modules 11 and 12 (a total of 10 connection points at the three-phase motor side terminals 21 and 22 and upper and lower connection terminals 23 and 24), allowing wiring man-hour to be reduced significantly. Further, two power modules are provided at the upper and lower stages of the motor, respectively, and FETs (e.g., FETs 13a and FETs 14d at U-phase energization) subjected to simultaneous turning ON control are provided in different power modules. This allows heating elements to be distributed to different modules, making it possible to suppress heat generation of the power module.

Further, in the SR motor control system 10 of FIG. 1, a switch part 31 is provided on the power supply line 30 between the battery 7 and the power modules 11 and 12 so as to control electrical connection of the power supply line 30. The switch part 31 is disposed at the front stage of (high side) of the power modules 11 and 12 and includes, as a semiconductor switching element, a FET 32 (first switching element) and a FET 33 (second switching element) . A smoothing capacitor 34 (second capacitor) is disposed between the FETs 32 and 33 so as to be parallel to the power modules 11 and 12.

One end side of the smoothing capacitor 34 is connected to the power supply line 30 between the FETs 32 and 33, and the other end side thereof is connected to the ground (grounded) . Diodes 41 and 42 are provided for the FETs 32 and 33, respectively, in parallel thereto. The diodes 41 and 42 are provided such that the conductive directions thereof are opposite to each other. That is, the directions of the diodes 41 and 42 are opposed to each other such that the forward direction of the diode 41 is from the SR motor 1 side to the battery 7 side and that the forward direction of the diode 42 is from the battery 7 side to the SR motor 1 side.

Further, a shunt resistance 35 for detecting current on the power supply line side is provided at the front stage of the switch part 31. The shunt resistance 35 is packed in one package together with the FETs 32 and 33 as a power supply side module 36 and is connected to a voltage detection circuit 37. The voltage detection circuit 37 detects voltage drop at the shunt resistance 35 and sends its detection value to the controller 15. The controller 15 calculates and controls a current value on the power supply line side based on the detection values from the voltage detection circuit 37. Further, the voltage detection circuit 37 detects voltage of the power supply 7 and sends its detection value to the controller 15. The controller 15 controls the power supply voltage based on the detection value from the voltage detection circuit 37.

Further, a booster capacitor 38 (first capacitor) is also provided between the switch part 31 and the power modules 11 and 12 so as to be parallel to the power modules 11 and 12. One end side of the booster capacitor 38 is connected to the power supply line 30 between the switch part 31 and the power modules 11 and 12, and the other end side thereof is connected to the ground (grounded). A voltage detection circuit (voltage detection part) 39 for detecting the charged state (voltage at the portion P on the power supply line 30) of the booster capacitor 38 is connected between the switch part 31 and the booster capacitor 38. The detection value of the voltage detection circuit 39 is also sent to the controller 15. The controller 15 controls ON/OFF of the FET 33 based on the detection value from the voltage detection circuit 39. Although the capacitor 38 is named "booster capacitor", it may be made to function as a buffer for suppressing voltage ripple caused due to switching during motor drive or regeneration operation, like the smoothing capacitor 34. That is, the booster capacitor 38 can also be used as a so-called smoothing capacitor.

In the SR motor control system 10 according to the present invention, the ON/OFF control of the FET 33 is performed in the regeneration operation so as to : (1) raise excitation voltage during the supply mode to increase regeneration current amount; and (2) reduce voltage ripple during the regeneration mode. Hereinafter, control forms for respective (1) boosting/regeneration and (2) suppression of ripple in regeneration voltage will be separately described.

### (1) Boosting/Regeneration

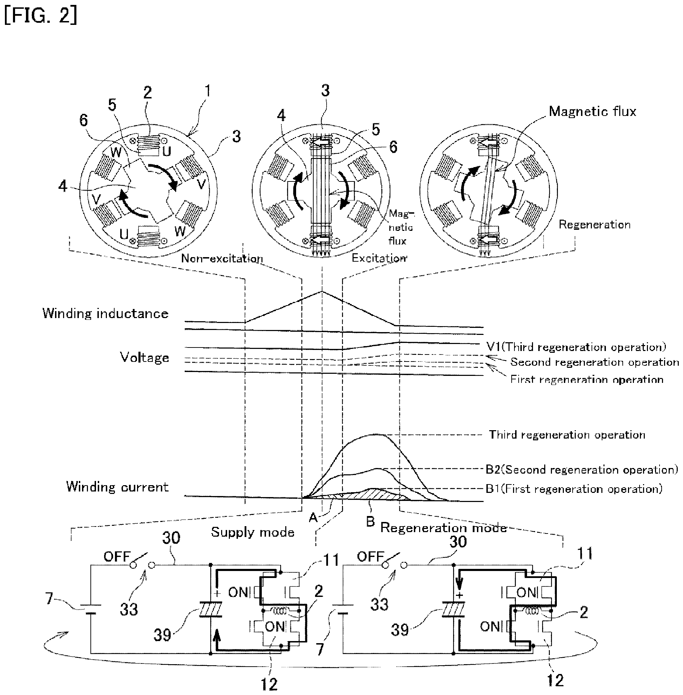

Also in the SR motor 1, power regeneration is performed when the rotor 4 is rotated by external force. However, unlike the conventional SR motor 51, the SR motor 1 performs the power regeneration operation in a state where the FET 33 is turned OFF. That is, the regeneration operation (power generation operation) is performed in a state where the SR motor 1 is separated from the power supply line 30. FIG. 2 is an explanatory view illustrating the power regeneration operation in the SR motor control system 10 (for one phase) . As illustrated in FIG. 2, also in the SR motor 1, the excitation coil 2 is temporarily energized at the timing when salient poles 5 of the stator 3 and salient poles 6 of the rotor 4 are opposed to and aligned with each other (portion A of FIG. 2: supply mode). Specifically, the rotation position of the rotor 4 is detected by the rotation position detection sensor, and the excitation coil 2 at the position where the distance between the salient poles 5 and 6 is equal to or smaller than a predetermined value is energized, and the energization is stopped when the distance between the salient poles 5 and 6 exceeds the predetermined value. At this time, in the SR motor 1, power is supplied from the booster capacitor 38 charged while the motor is being driven.

By the energization to the excitation coil 2, magnetic flux is generated in the SR motor 1 through the rotor 4. When the rotor 4 is rotated in this state, the generated magnetic flux decreases, and then electromotive force is generated in the excitation coil 2 so as to maintain the magnetic flux. As a result, regeneration current flows in the excitation coil 2, whereby power regeneration is performed (portion B of FIG. 2: regeneration mode) . At this time, in the SR motor control system 10, the SR motor 1 is separated from the power supply line 30, so that the regenerated power is charged in the booster capacitor 38. Then, when regeneration operation for the subsequent phase (approach between subsequent tooth and salient pole) is started, power is supplied again from the booster capacitor 38 to the excitation coil 2.

As described above, in a case where the SR motor is used as a generator, when the motor rotation speed is increased, the conduction time of the coil shortens, reducing the regeneration current and, hence, degrading power generation efficiency. Accordingly, in the high rotation speed region, large regeneration power cannot be returned to the battery 7 side (B1 of FIG. 2). Thus, in the SR motor control system 10 according to the present invention, the regeneration power of B1 is not returned to the battery 7 side, but is stored in the booster capacitor 38 for use in the subsequent regeneration operation. As a result, the subsequent regeneration operation is started with a voltage higher than that at the previous regeneration operation, and thus the amount of current to be supplied to the excitation coil 2 increases to increase magnetic flux to be excited. When the magnetic flux to be excited increases, the regeneration current generated in the excitation coil 2 increases (B2 of FIG. 2).

When the booster capacitor 38 has a voltage equal to or higher than a predetermined voltage V1 (threshold value) after appropriate repetition of the above circulation boosting operation, the FET 33 is turned ON at the timing when the excitation coil 2 is not energized. The charged state of the booster capacitor 38 is monitored by the controller 15 through the voltage detection circuit 39 and, when regeneration of power equal to or greater than a predetermined value becomes possible, the SR motor 1 and power supply line 30 are connected to return the power to the battery 7 side. Thus, power can be regenerated in the battery after energy is stored to some extent, allowing the power generation amount to be increased as compared to a case where the power is regenerated at each time of the power generation operation. Therefore, even when the time period during which the tooth and salient pole are opposed to each other is short like when the motor is rotated at high speed, high efficiency power regeneration can be achieved.

### (2) Suppression of Ripple in Regeneration Voltage

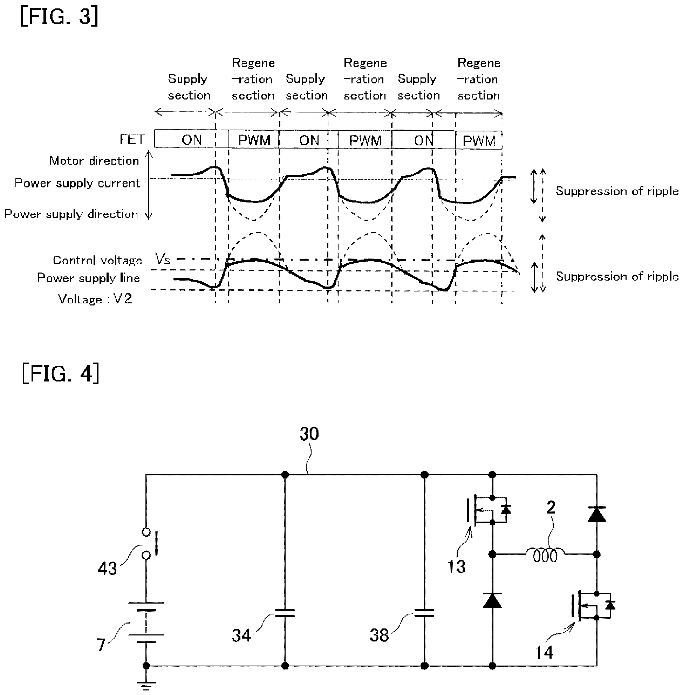

In the SR motor control system 10 according to the present invention, when power is regenerated on the battery 7 side, the FET 33 is PWM-controlled based on the detection value of the voltage detection circuit 37 to suppress the ripple in the regenerated voltage. FIG. 3 is an explanatory view illustrating a change in regeneration current/voltage during the power regeneration. When regenerating the electric charge of the booster capacitor 38 in the battery 7, the controller 15 monitors voltage V2 of the power supply line 30 through the voltage detection circuit 37 and PWM-controls the FET 33 so as to make the voltage V2 constant. That is, as illustrated in FIG. 3, the FET 33 is PWM-controlled so as not to allow the voltage of the regeneration current to exceed a control voltage (threshold value) Vs. When the voltage value exceeds the Vs, the duty of the PWM control is reduced to drop the voltage to thereby suppress voltage fluctuation.

In the SR motor control system 10, the switching operation of the FET 33 by the PWM control and the electrostatic capacitance of the booster capacitor 38 are set such that the regeneration voltage to be regenerated in the battery 7 side becomes equal to or lower than the control voltage Vs. In the suppression of the ripple, a regeneration current value in the power supply line 30 may be detected in place of the power supply line voltage V2. In this case, the FET 33 is PWM-controlled so as to make the detected value equal to or smaller than a predetermined value.

Further, the smoothing capacitor 34 for rectification is provided between the battery 7 and the FET 33. When the FET 33 is turned ON to make an electric charge flow from the booster capacitor 38 to the battery 7, a part of the electric charge flows in the smoothing capacitor 34, whereby a rapid change in the regeneration voltage is suppressed. That is, the smoothing capacitor 34 serves as a buffer during the regeneration and reduces the influence of an inductance component to thereby absorb the ripple in the regeneration voltage.

In the SR motor control system 10, the FET 33 is turned OFF first, and then the power regeneration operation is performed while energy is being stored in the booster capacitor 38. As a result, the power generation amount can be increased as compared to a case where the power is regenerated at each time of the power generation operation. In particular, this makes it possible to improve power generation efficiency in the high rotation speed region. In the system, to regenerate power in the battery 7 side, the smoothing capacitor 34 is used to rectify the regeneration current, and the FET 33 is PWM-controlled according to the regenerated voltage. This allows suppression of the ripple in the regeneration voltage, stabilization of the operation of electronic circuits, and reduction in conducting/radiation noise.

In the system, the SR motor 1 and the battery 7 can be completely separated from each other by turning OFF the FETs 32 and 33. As illustrated in FIG. 4, in the conventional SR motor control system is provided with an overcurrent prevention contactor 43 as an energization ON/OFF device for a large current system. On the other hand, in the SR motor control system 10 according to the present invention, the contactor 43 can be omitted by providing the FETs 32 and 33 on the power supply line 30, simplifying the system configuration.

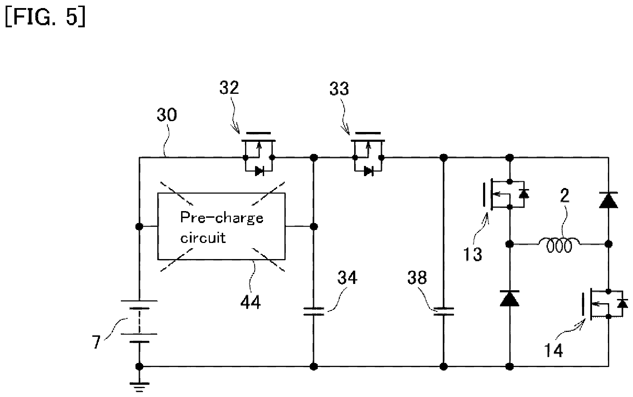

Further, as illustrated in FIG. 5, it is possible to provide a pre-charge circuit 44 for preventing inrush current from flowing to the smoothing capacitor 34; however, in the SR motor control system 10, the pre-charge circuit 44 can be omitted by appropriately operating the FET 32 in an active region. In this case, it is possible to appropriately suppress the inflow current to the smoothing capacitor 34 by, for example, PWM-controlling the FET 32. At this time, the voltage of the smoothing capacitor 34 can be monitored by the voltage detection circuit 39.

On the other hand, the PWM control of the booster capacitor 38 or FET 33 can be used not only at the regeneration operation but also when the SR motor 1 as the starter/generator is driven as a motor. For example, in order to prevent a large current from transiently flowing to the booster capacitor 38 in an uncharged state when the SR motor 1 is started, the FET 33 maybe PWM-controlled at power-on time to appropriately suppress the inflow current to the booster capacitor 38. Also in this case, the voltage of the booster capacitor 38 is monitored by the voltage detection circuit 39. Then, when the voltage of the booster capacitor 38 reaches a predetermined value, the PWM control is stopped, and the FET 33 is turned ON. That is, the PWM control of the FET 33 can be used for the purpose other than suppression of the ripple at the regeneration operation.

### (Second Embodiment)

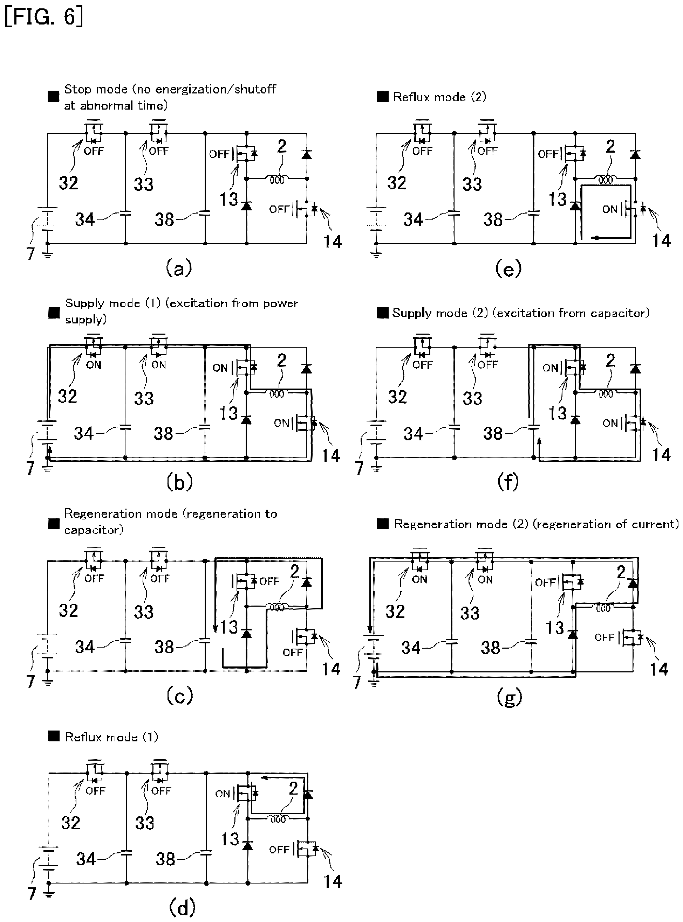

Although a configuration in which the supply mode and regeneration mode are performed during the power regeneration operation has been described in the above first embodiment, a configuration may be adopted, in which the regeneration mode and a reflux mode are performed together after the supply mode in order to maintain a target current value in the regeneration mode. FIGS. 6A to 6G are explanatory views each illustrating an operation pattern in each mode when the reflux mode is performed (for one phase). The present embodiment is performed in a system similar to that of the first embodiment; however, in FIGS. 6A to 6G, among all the FETs 13 and 14 in the respective power modules 11 and 12, the FETs 13 and 14 that are not subjected to ON/OFF switching are replaced by diodes.

Also in the second embodiment, the supply mode (1) (excitation from the power supply) of FIG. 6B is first performed for the SR motor 1 in a stop mode of FIG. 6A. That is, the FETs 13 and 14 are turned ON in a state where the FETs 32 and 33 are turned ON to thereby temporarily energize the excitation coil 2. Then, as illustrated in FIG. 6C, the FETs 32, 33 and FETs 13, 14 are turned OFF to start the regeneration mode (1) (regeneration to capacitor) to charge the booster capacitor 38. At this time, in order to maintain the target current value, the regeneration mode (1) and reflux mode (1) or (2) are repeatedly performed. The reflux modes (1) and (2) are each performed by turning ON only one of the FETs 13 and 14 in a state where the FETs 32 and 33 are turned OFF, as illustrated in FIGS. 6D and 6E.

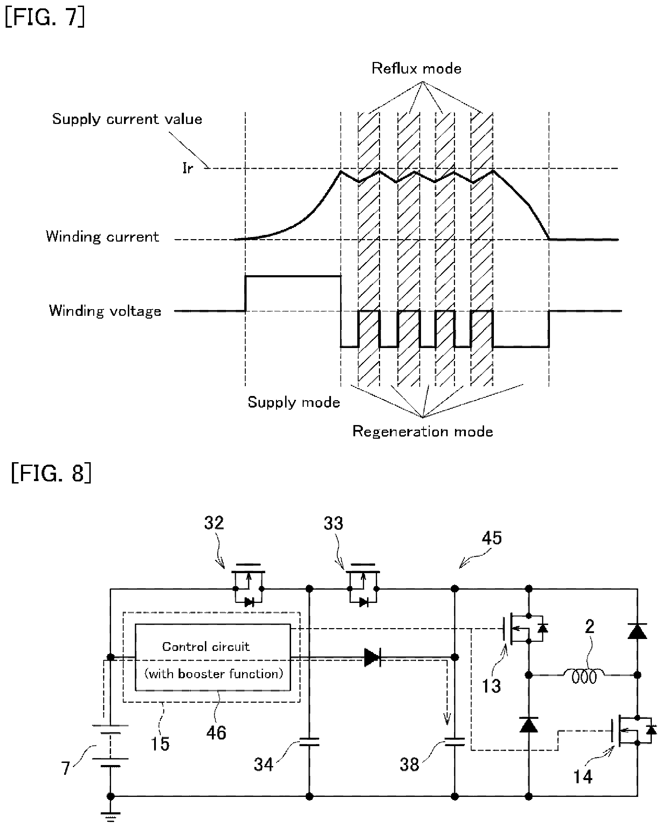

FIG. 7 is an explanatory view illustrating a change in winding current value when the regeneration mode (1) and reflux modes (1) or (2) are repeatedly performed. As illustrated in FIG. 7, the reflux mode is started when a regeneration current value exceeds a reference supply current value Ir. The switching between the regeneration mode and the reflux mode is made for each control period. Specifically, when the regeneration current is lowered in the reflux mode, the regeneration mode is performed in the subsequent control period. Thereafter, when the regeneration current value exceeds the reference supply current value Ir, the reflux mode is performed in the subsequent control period. The above switching operation is thus repeated. In this configuration, it does not matter which one of the reflux modes (1) and (2) is performed, and only one of the reflux modes (1) and (2) may be performed. However, when both the two patterns of the reflux modes are performed (e.g., alternately), loads (heat generation, etc.) on the FETs can be equalized to prevent the load from being applied on only one FET.

The regeneration mode (1) and reflux mode (1) or (2) are thus repeated before charging the booster capacitor 38, and regeneration operation for the subsequent phase is performed. In this regeneration operation, power is supplied from the booster capacitor 38 to the excitation coil 2 (supply mode (2) in FIG. 6F: excitation from capacitor). That is, the regeneration power generated in the previous regeneration mode (1) is not returned to the battery 7 side, but is stored in the booster capacitor 38 for use in the subsequent regeneration operation. As a result, as described above, the subsequent regeneration operation is started with a voltage higher than that at the previous regeneration operation, and thus the amount of current to be supplied to the excitation coil 2 is increased to increase magnetic flux to be excited. When the magnetic flux to be excited increases, the regeneration current generated in the excitation coil 2 increases.

Then, the reflux/boosting operation is appropriately repeated and, when the voltage of the booster capacitor 38 reaches a value equal to or higher than a predetermined V1 (threshold value), the FETs 32 and 33 are turned ON at the timing when the excitation coil 2 is not energized (regeneration mode (2) in FIG. 6G: regeneration to power supply). The charged state of the booster capacitor 38 is monitored by the controller 15 through the voltage detection circuit 39 and, when regeneration of power equal to or greater than a predetermined value becomes possible, the SR motor 1 and power supply line 30 are connected to return the power to the battery 7 side. As described above, the smoothing capacitor 34 for rectification is provided between the battery 7 and the FET 33, so that when the FETs 32 and 33 are turned ON to make an electric charge flow from the booster capacitor 38 to the battery 7, a part of the electric charge flows in the smoothing capacitor 34, whereby a rapid change in the regeneration voltage is suppressed.

### (Third Embodiment)

The following describes, as a third embodiment of the present invention, a configuration in which an existing control circuit with booster function is used to charge the booster capacitor 38 with a boosted voltage higher than a normal voltage (e.g., voltage of two times the normal voltage). FIG. 8 is an explanatory view illustrating the circuit configuration of an SR motor control system 45 according to the third embodiment of the present invention (for one phase). In the present embodiment, the same reference numerals are given to the same components or members as in the first embodiment, and the description thereof will be omitted.

In the SR motor control system 45, a control circuit 46 with booster function provided in the controller 15 is used to pre-charge the booster capacitor 38. A voltage higher than the power supply voltage is required to operate the FETs 13 and 14, and thus the control circuit 46 with booster function is provided in the controller 15 for FET operation. In this system, the existing control circuit 46 is utilized to charge the booster capacitor 38. When the control circuit 46 is used to charge the booster capacitor 38, the charging of the booster capacitor 38 can be achieved with a stable voltage, making it possible to reduce the ripple of the regeneration current.

When the SR motor 1 is started, or when the rotation speed is required to be increased, current can be supplied from the booster capacitor 38 charged with the boosted voltage. As a result, a large current can be temporarily supplied to the SR motor 1 to increase the motor torque according to the need. That is, the booster capacitor 38 can be used not only for the above-mentioned boosting/regeneration, but also for boosting drive at motor start-up, etc.

The present invention is not limited to the above embodiments and may be variously modified without departing from the scope of the invention.

For example, in the above embodiments, the power modules 11 and 12 of which the power elements are modularized are used; however, the present invention can be applied to a circuit in which power elements are arranged separately not as the power modules 11 and 12. Further, the control form according to the present invention is effective not only for improving power generation efficiency in the high rotation speed region of the motor, but also for improving power generation efficiency in a motor in which the time period during which the tooth and salient pole are opposed to each other is short due to a large number of teeth. Furthermore, although power is regenerated on the battery 7 side by turning ON the FET 33 after the third reflux/boosting operation in the above embodiments, the number of the reflux/boosting operations is not limited to this, and the FET 33 may be turned ON at the time point when the charged voltage of the booster capacitor 38 exceeds the voltage V1 after repetition of the reflux/boosting operations.

### Industrial Applicability

The SR motor control system according to the present invention can be widely applied not only to drive control for the SR motor for ISG, but also to drive control for other SR motors such as on-vehicle SR motors or SR motors used for home electric appliances or industrial machines.

### Reference signs list

- 1:: SR motor
- 2:: Excitation coil
- 2U:: U-phase excitation coil
- 2V:: V-phase excitation coil
- 2W:: W-phase excitation coil
- 3:: Stator
- 4:: Rotor
- 5:: Salient pole
- 6:: Salient pole
- 7:: Battery
- 10:: SR motor control system
- 11:: Power module (upper stage side)
- 12:: Power module (lower stage side)
- 13:: FET
- 13a to 13f:: FET
- 14:: FET
- 14a to 14f:: FET
- 15:: Controller
- 16:: Resistance
- 16a to 16c:: Resistance
- 17:: Resistance
- 17a to 17c:: Resistance
- 18a, 18b:: Voltage detection circuit
- 21:: Motor side terminal
- 22:: Motor side terminal
- 23:: Connection terminal
- 24:: Connection terminal
- 30:: Power supply line
- 31:: Switch part
- 32:: FET
- 33:: FET
- 34:: Smoothing capacitor
- 35:: Shunt resistance
- 36:: Power supply side module
- 37:: Voltage detection circuit
- 38:: Booster capacitor
- 39:: Voltage detection circuit (voltage detection part)
- 41:: Diode
- 42:: Diode
- 43:: Contactor
- 44:: Pre-charge circuit
- 45:: SR motor control system
- 46:: Control circuit with booster function
- 51:: SR motor
- 52:: Rotor
- 53:: Stator
- 54:: Salient pole
- 55:: Salient pole
- 56:: Coil
- VI:: Reflux/boosting stop voltage (threshold value)
- V2:: Power supply line voltage
- Vs:: Control voltage (threshold value)

## Claims

1. An SR motor control system performing drive control for a switched reluctance motor, which has a stator provided with a plurality of excitation coils and a rotor provided inside the stator and provided with a plurality of salient poles, and capable of performing power regeneration operation for obtaining regeneration power from the switched reluctance motor being driven,
the SR motor control system **characterized by** comprising:
a power circuit part having a plurality of power elements for switching energization to the plurality of excitation coils;
a switch part disposed on a power supply line between the power circuit part and a power supply and having a switching element controlling electrical connection of the power supply line;
a capacitor disposed between the switch part and the power circuit part so as to be parallel to the power circuit part; and
a controller controlling ON/OFF of the switching element, wherein
the power regeneration operation has a supply mode that energizes the excitation coil to generate magnetic flux and a regeneration mode that generates regeneration current in the excitation coil by utilizing a change in the magnetic flux, and
the controller performs the power regeneration operation in a state where the switching element is turned OFF to perform the supply mode to supply the charge of the capacitor to the excitation coil and, performs reflux/boosting to charge the capacitor with the regeneration current and turns ON the switching element after performing the reflux/boosting a plurality of times to return the charge stored in the capacitor to the power supply side.

2. The SR motor control system according to claim 1, **characterized in that**
the controller performs the power regeneration operation involving the reflux/boosting in a high rotation speed region where the rotation speed of the switched reluctance motor exceeds a predetermined value.

3. The SR motor control system according to claim 1 or claim 2, **characterized by** further comprising a voltage detection part that detects the voltage of the capacitor, wherein
in the power regeneration operation involving the reflux/boosting, the controller turns ON the switching element when the detection value of the voltage detection part exceeds a predetermined threshold value.

4. The SR motor control system according to any one of claims 1 to 3, **characterized in that**
in the power regeneration operation involving the reflux/boosting, the controller turns ON the switching element at the timing when the excitation coil is not energized.

5. The SR motor control system according to any one of claims 1 to 4, **characterized in that**
a smoothing capacitor capable of storing a charge to be returned to the power supply by the power regeneration operation is provided between the switching element and the power supply.

6. The SR motor control system according to any one of claims 1 to 5, **characterized in that**
the switching element is an FET, and
when returning the charge stored in the capacitor to the power supply side, the controller PWM-controls the FET so as not to allow the voltage value of the regeneration current to exceed a predetermined threshold value.

7. An SR motor control system performing drive control for a switched reluctance motor, which has a stator provided with a plurality of excitation coils and a rotor provided inside the stator and provided with a plurality of salient poles, and capable of performing power regeneration operation for obtaining regeneration power from the switched reluctance motor being driven,
the SR motor control system **characterized by** comprising:
a power circuit part having a plurality of power elements for switching energization to the plurality of excitation coils;
a switch part disposed on a power supply line between the power circuit part and a power supply and having a switching element controlling electrical connection of the power supply line;
a first capacitor disposed between the switch part and the power circuit part so as to be parallel to the power circuit part; and
a controller for controlling ON/OFF of the switching element, wherein
the switch part has first and second switching elements connected in series on the power supply line and first and second diodes disposed in parallel to the first and second switching elements, respectively,
the first and second diodes are disposed such that the conductive directions thereof are opposite to each other, and
a second capacitor whose one end side is connected to the power supply line between the first and second switching elements and whose other end side is connected to the ground side is disposed between the first and second switching elements.

8. An SR motor control method which is a method of controlling a switched reluctance motor in an SR motor control system,
the system including:
the switched reluctance motor having a stator provided with a plurality of excitation coils and a rotor provided inside the stator and provided with a plurality of salient poles;
a power circuit part having a plurality of power elements for switching energization to the plurality of excitation coils;
a switch part disposed on a power supply line between the power circuit part and a power supply and having a switching element controlling electrical connection of the power supply line;
a capacitor disposed between the switch part and the power circuit part so as to be parallel to the power circuit part; and
a controller for controlling ON/OFF of the switching element,
the system being capable of performing power regeneration operation for obtaining regeneration power from the switched reluctance motor being driven, wherein
the power regeneration operation has a supply mode that energizes the excitation coil to generate magnetic flux and a regeneration mode that generates regeneration current in the excitation coil by utilizing a change in the magnetic flux, and
the power regeneration operation is performed in a state where the switching element is turned OFF to perform the supply mode to supply the charge of the capacitor to the excitation coil and, reflux/boosting of charging the capacitor with the regeneration current is performed, and the switching element is turned ON after performing the reflux/boosting a plurality of times to return the charge stored in the capacitor to the power supply side.

9. An SR motor control method which is a method of controlling a switched reluctance motor in an SR motor control system,
the system including:
the switched reluctance motor having a stator provided with a plurality of excitation coils and a rotor provided inside the stator and provided with a plurality of salient poles;
a power circuit part having a plurality of power elements for switching energization to the plurality of excitation coils;
a switch part disposed on a power supply line between the power circuit part and a power supply and having a switching element controlling electrical connection of the power supply line;
a capacitor disposed between the switch part and power circuit part so as to be parallel to the power circuit part; and
a controller for controlling ON/OFF of the switching element,
the system being capable of performing power regeneration operation for obtaining regeneration power from the switched reluctance motor being driven, wherein
the switch part has first and second switching elements connected in series on the power supply line and first and second diodes disposed in parallel to the first and second switching elements, respectively,
the first and second diodes are disposed such that the conductive directions thereof are opposite to each other,
a second capacitor whose one end side is connected to the power supply line between the first and second switching elements and whose other end side is connected to the ground side is disposed between the first and second switching elements,
the power regeneration operation has a supply mode that energizes the excitation coil to generate magnetic flux and a regeneration mode that generates regeneration current in the excitation coil by utilizing a change in the magnetic flux, and
during the regeneration mode, ON/OFF of the second switching element is controlled so as not to allow the voltage value of the regeneration current to exceed a predetermined threshold value.
